# EUROPEAN PATENT APPLICATION

(11) **EP 1 041 795 A1**
(43) Date of publication of application: **04.10.2000**
(21) Application number: 99480016.7
(22) Date of filing: 30.03.1999
(51) Int. Cl.: H04L 29/06

(54) **Method and system for local application selection with customisable user profiling**

(71) Applicant: INTERNATIONAL BUSINESS MACHINES CORPORATION, Armonk, NY 10504 (US)
(72) Inventor: Giroir, Didier, 06800 Cagnes sur Mer (FR); Lorrain, Jean, 06140 Vence (FR); Hericourt, Olivier, 06800 Cagnes sur Mer (FR)
(74) Representative: Etorre, Yves Nicolas

(57) **Abstract**

The present invention relates to the transmission of Systems Network Architecture (SNA) information through the Internet Protocol (IP) network , and more particularly to a method and system for selecting an application in an Internet protocol (IP) network. The method comprises the steps of:
- locally selecting in a web client an application by means of:
   - an application selection processor previously transferred from an application selection processor web server;
   - a selection screen previously transferred from a selection screen web server;
- accessing the selected application from the web client.

## Description

### Technical field of the invention

The present invention relates to the transmission of Systems Network Architecture (SNA) information through the Internet Protocol (IP) network, and more particularly to a method and system for users for locally selecting target applications at their current locations, with customisable user profiling.

### Background art

### ENVIRONMENT

### SNA-IP Environment

Every day, for all sorts of reasons, more are more companies are focusing on the consolidation of the multiple specialized networks they directly operate or lease from service providers onto a single protocol network. These multiple specialized networks are based on diverse networking technologies such as Systems Network Architecture (SNA), Internet Protocol (IP) or Internetwork Packet Exchange (IPX). These companies are making this consolidation one of their top priorities, they are almost exclusively selecting IP (the Internet Protocol) as their protocol of choice. However, for the overwhelming majority of these companies that are using SNA protocols and applications, there still is and will be for the many years to come, a major requirement in this changing environment. The requirement is for the employees of these companies to keep the capability they always had to have access to the huge amount of existing corporate data residing in traditional mainframes and accessible through SNA applications.

### TN3270

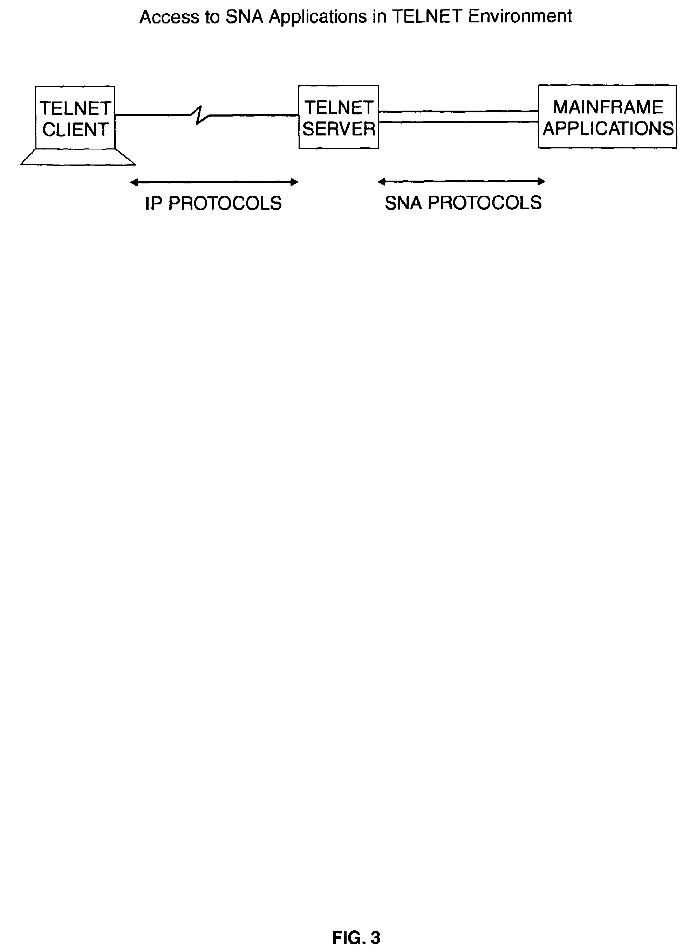

In an IP environment, a widely used technique for the transport of SNA information across an IP network is the use of Telnet technologies (TN3270). This technique for SNA "green screen" workstation users is a Client/Server approach. "Host On Demand" from IBM or "WebClient" from CISCO are examples of Client software implementations. Network Utility from IBM or CISCO router's offerings are typical Server implementations (hardware and software). The "Client" piece usually runs within the customer's workstation while the "Server" piece is usually placed in front of the customer's Data Center mainframes (or sometimes directly within the mainframe itself) or within the customer's branch offices. As illustrated in Figure 3, IP protocols are used between the Server and the Clients, while traditional SNA protocols are used between the Server and the target Applications. More information concerning Telnet, TN3270 and Network Utility can be found in the following publications incorporated herewith by reference:
- "IBM 2216/Network Utility Host Channel Connection", Erol Lengerli, Jacinta Carbonell, Thomas Grueter; IBM International Technical Support Organization, January 1999, SG24-5303-00.
- "IBM Network Utility Description and Configuration Scenarios", Tim Kearby, Peter Gayek, Gallus Schlegel, Imre Szabo, Zhi-Yong Zhang; IBM International Technical Support Organization, January 1999, SG24-5289-00.
- "Internetworking with TCP/IP - Volume I - Principles, Protocols, and Architecture" Douglas E.Comer, Second Edition, Prentice Hall 1991.
- Request For Comments (RFCs) from the Internet Engineering Task Force (IETF):
   - RFC 1576: TN3270 Current Practices,
   - RFC 1646: TN3270 Extensions for LU name and Printer Selection,
   - RFC 1647: TN3270 Enhancements,
   - RFC 2355: TN3270 Enhancements.

### APPLICATION SELECTION PROCESSOR

### Traditional SNA End-to-End

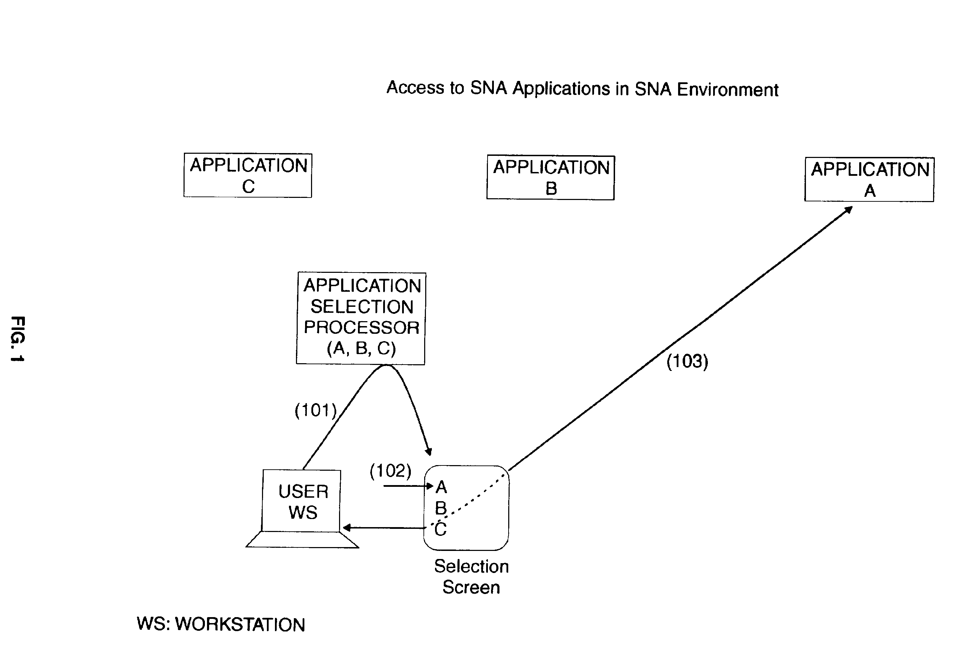

In the SNA world, workstation users traditionally obtain access to their favorite SNA applications by connecting first to an intermediate application. This intermediate application (called the "Application Selection Processor") provides for an indirection to the real target application, the workstation user wants to establish a screen session to. The Application Selection Processor presents to the user a selection menu (called "Selection Screen") of all the possible SNA applications that a user may access. Figure 1 describes a traditional SNA access to an Application Selection Processor in an SNA environment.
- First step (101) : The user is presented by the Application Selection Processor a Selection Screen of a plurality of possible applications (three possible applications A, B and C). Usually, the workstation (WS) automatically sets up a direct connection to the Application Selection Processor, as soon as the workstation's SNA protocol stack is started (or in case of a "dumb" terminal, when the terminal is powered on).
- Second step (102): Provided that at this time, the Application Selection Processor is up and running, the connected user selects an application (application A) by typing an application name on the Selection Screen.
- Third step (103): Finally, the user gets connected to the desired application (application A).

### Telnet 3270 Based Approach

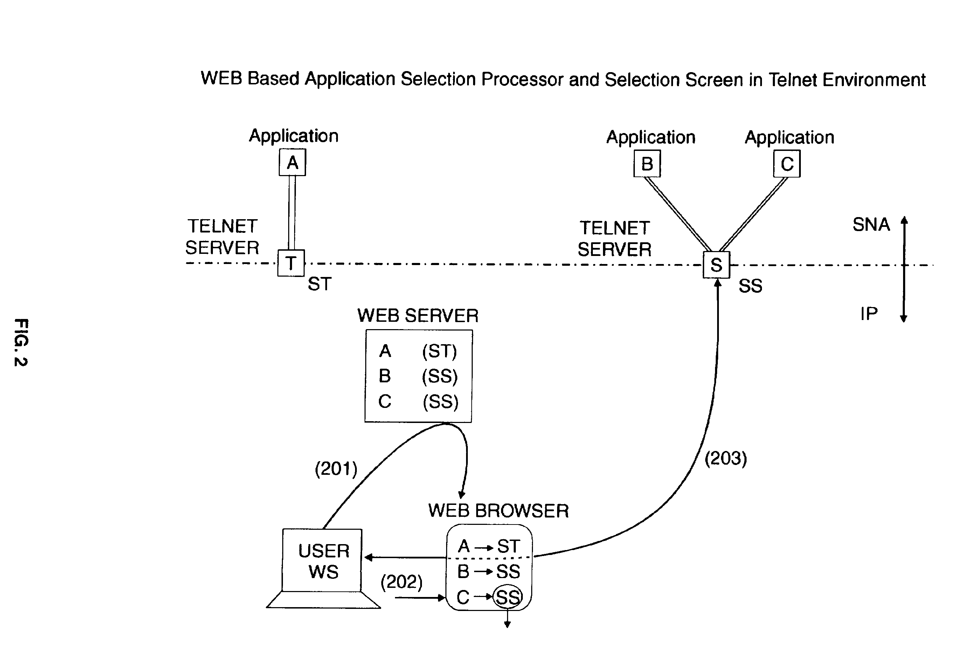

In a TN3270 Client-Server approach, one technique is to provide the intermediate Application Selection Processor via a Web Server implementation. In this case, the user accesses the Application Selection Processor within the Web Server, using his favorite Web Browser. This is approach is describes in Figure 2:
- First step (201) : The user gets from the Application Selection Processor in the Web Server a Selection Screen within his favorite Web Browser listing three applications A, B and C. By selecting the desired SNA Application from the Selection Screen (just a click from within the browser), the workstation obtains the IP addressing/naming information corresponding to the preferred Telnet Server for the desired target application.
- Second step (202) : The user chooses application C from the Selection Screen and obtains back from the Web Server the address - SS - for the Telnet Server (S) (providing access to the mainframe housing application C).
- Third step (203) : Thus, the local Telnet Client may then be started either manually or automatically to access the preferred Telnet Server by using the address provided by the Application Selection Processor. The user gets back the address of the Telnet server (Server S which address is SS) and connects to the target application C via the appropriate Server (Telnet Server S).

Going through an Application Selection Processor, shields end-users from changes that inevitably occur, for example:
- when an application is changed to be run from a Host to another Host in a different location, or
- when a new application is added.

In such cases, only the Selection Screen is modified and changes in target application locations are completely transparent to the workstations. The workstations are not impacted by changes in target application locations.

Another advantage is that users connect in to a single intermediate application (the Application Selection Processor) that provides an access point to the many possible SNA applications, wherever they are located. The use of an intermediate, menu-driven Application Selection Processor greatly simplifies the task of the workstation users that automatically obtain access to an user friendly, menu driven, application selection menu (the Selection Screen) and are not concerned by manual definitions that need to be performed and maintained over changes.

### PROBLEM

Using an intermediate Web Server for the Application Selection Processor presents the following problems:
- The Web Server running the Application Selection Processor may be unreachable, unavailable or too busy to process the selection application. As there is no local copy on the Web Browser, any problem on the Application Selection Processor may result in a service interruption.
- The network may be slow and lead to unacceptable response time for the user to access the Web based Application Selection Processor in order to select the target application, at the time the user needs to connect in.
- The user may be modem connected to the network and therefore due to bandwidth constraints, may not be willing to add the target application selection phase across the network.
- The customization of Selection Screens for the various users (where each user wants a customized Selection Screen) may be real hard to manage within the server when the number of users increases.

### Objects of the invention

It is an object of the present invention to address the problems found in current Web based solutions by making the Application Selection Processor and the associated Selection Screen locally available and executable within a user's workstation.

It is a further object of the present invention to allow an optional customization of the Selection Screens performed individually by users and kept local within their workstations.

### Summary of the invention

The present invention relates to the transmission of Systems Network Architecture (SNA) information through the Internet Protocol (IP) network , and more particularly to a method and system for locally selecting an application from a web client in an Internet protocol (IP) network. The method comprises the steps of:
- locally selecting in a web client an application by means of:
   - an Application Selection Processor previously transferred from an Application Selection Processor web server;
   - a Selection Screen previously transferred from a Selection Screen web server;
- accessing the selected application from the web client.

### Drawings

The novel and inventive features believed characteristics of the invention are set forth in the appended claims. The invention itself, however, as well as a preferred mode of use, further objects and advantages thereof, will best be understood by reference to the following detailed description of an illustrative detailed embodiment when read in conjunction with the accompanying drawings, wherein :
- Figure 1 shows a traditional SNA access to an Application Selection Processor in a SNA environment.
- Figure 2 shows Web based Application Selection Processor and Selection Screen in a Telnet 3270 Environment.
- Figure 3 shows the access to SNA Applications in a TN3270 Environment.
- Figure 4 shows the two Web Servers used for on-demand downloading of the Application Selection Processor and the Selection Screen according to the present invention.

### Preferred embodiment of the invention

### Extension of networks

To remain competitive, network users are extending their traditional internal SNA and IP networks outward to business partners, dealers, suppliers, and customers. In this expanding environment, users are also searching for ways to save money and provide connectivity between their mix of SNA and TCP/IP server applications and their TCP/IP and SNA desktop client population.

### Consolidation of networks

Many companies today are considering the consolidation of their WAN traffic onto a single IP-only backbone. At the same time, other companies are simplifying their workstation configurations and attempting to run only the TCP/IP protocol stack at the desktop. However, most of these companies still require access to SNA applications hosts.

### TN3270

TN3270 meets these requirements by allowing the end user to run IP from the desktop over the network and attach to his SNA host through a TN3270 server. The clients connect to the server using a TCP connection. The server provides a gateway function for the downstream TN3270 clients by mapping the client sessions to SNA-dependent LU-LU sessions that the server maintains with the SNA host. The TN3270 server handles the conversion between the TN3270 data stream and an SNA 3270 data stream.
As mentioned above, the path from a TN3270 client to the SNA host consists of:
1. A TCP connection over IP from the client to the server;
2. An SNA LU-LU session from the server to the host; Connecting to a host for establishing an LU-LU session can be accomplished using a traditional subarea connection or using an APPN connection.

To deploy a TN3270 solution, TN3270 client software is installed on desktop workstations and TN3270 server software is installed in one of several places discussed below. Client software is available from IBM and many other vendors, and runs on top of the TCP/IP stack in the workstation. A given client product provides one of two possible levels of standards support:
- Base TN3270 client;
   These clients conform to RFC 1576 (TN3270 Current Practices) and/or RFC 1646 (TN3270 Extensions for LU name and Printer Selection).
- TN3270E client
   These clients conform to RFC 1647 (TN3270 Enhancements), and RFC 2355 (TN3270 Enhancements).

A server implementation that can support TN3270E clients is called a TN3270E server.

The TN3270 server function can be placed in a variety of products and positions within a network, including:
- in the SNA host itself;
- in a router in front of the data host or within the network or
- in a specialized box within the network;

### Application Selection Processor and Selection Screen

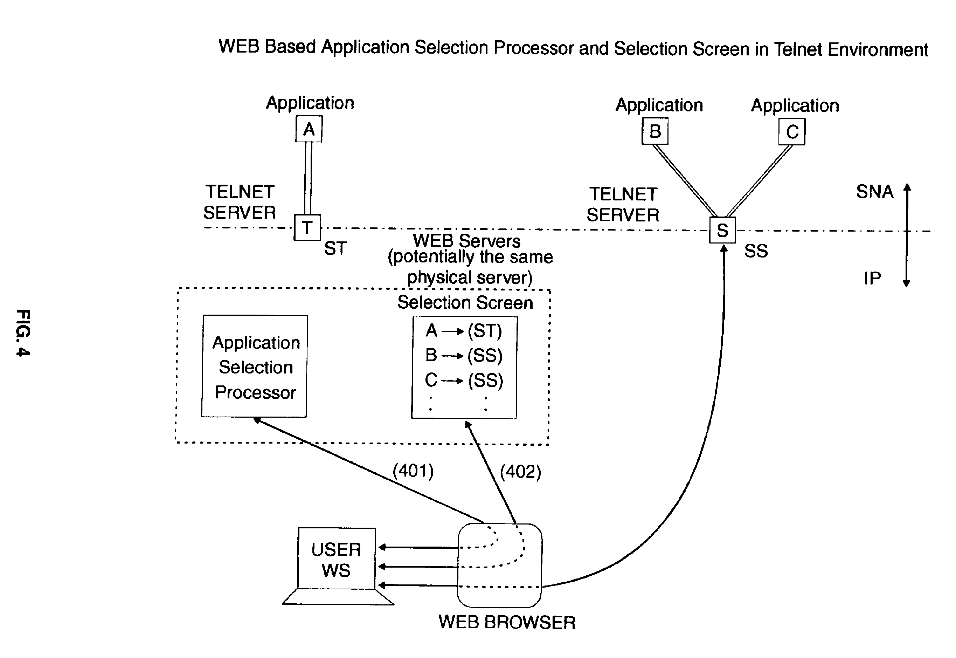

As described in Figure 4, the present invention is directed to a software package that locally runs within user's workstations, for selecting applications across the network, wherever they are located. When this is required, the software is dynamically downloaded from one or a plurality of Web Servers (an "Application Selection Processor" Web Server and a "Selection Screen" Web Server) accessible via the Internet Protocol (IP) network. Two Web Servers are not required and the same Server may be used to provide both repositories, the Application Selection Processor code and the associated Selection Screen (or set of screens). The choice is left at the designer's discretion. For the sake of generality, the two Servers approach will be described.

### • The Application Selection Processor Web Server:

The Web Server is initialized as repository for distributing the latest version of the Application Selection Processor code. In other words, the Application Selection Processor Web Server is loaded with the latest version of the Application Selection Processor code. This code may then be downloaded within the user's workstation, on an "on-demand" basis (step 401).

### • The Selection Screen Web Server:

There is a configuration process, by a System Administrator, to define what applications an individual user (or a class of users) is supposed (and enabled) to access. This configuration process defines the Selection Screen (or set of screens) that will be presented to the user (or class of users) when the Application Selection Processor application is started. Classes (subgroup) of users may be defined, to further tailor the screen appearance to a set of users. This Selection Screen may then be downloaded within the user's workstation, on an "on-demand" basis (step 402). The classes of users may be defined for instance based on organization or geographical criteria (according to IP addresses).

When downloaded within the user's workstation, the Application Selection Processor and Selection Screen(s) information (step 401 and 402) compose a locally executable software package that allows a user to select from the set of applications (SNA or even non-SNA applications such as IP applications) that each user may need to access. Further, this selection menu is optionally customisable by the end-user at his discretion, to contain only those applications the particular user is more likely to chose from. This is the user customization capabilities.

This "on-demand" downloading of the latest Application Selection Processor along with the downloading of the latest Selection Screen (the menu) of the possible applications, on a per user basis, presents significant advantages over classical Web Server based application selection screen processors or classical SNA Application Selection Processors. As an example, when the centralized Application Selection Processor is not running (or is too slow) for some reason, no communication can occur for the workstations that use this processor, which is really a problem because the real target SNA applications are up and running. In such a case, the local copies of the Application Selection Processor and of the Selection Screen that have been saved after the last on-demand downloading may be used directly. In the case where changes in application locations have occurred, the requested communication will be rejected and the user will have to refresh his locally saved information when possible from the Application Selection Processor and Selection Screen Web Servers.

The Selection Screen provides the address of the best Telnet Server to have access to the target application, and in addition may also provide the address of a backup Telnet Server to cope with failures of the preferred Telnet Server.

### Modes of Operations

According to the present invention application, the Application Selection Processor itself as well as the Selection Screen(s) can be locally saved within the user's workstation and are able to run in a "disconnected mode" even in case of failure of the Web Servers themselves or in case these cannot be accessed. Thus, there are several modes of operation for workstation users:

### • Initialisation mode.

This is for a new user, or for a user that has invalidated for some reasons his locally saved copy of the Application Selection Processor and Selection Screen. In this mode, there is no other choice than loading from the Web Servers the latest versions of both the Application Selection Processor and the Selection Screen(s) code. After a successful download (initiated for instance from a Java applet extension of the Web Browser), the information is locally saved for further usage. To begin the process, the user signs on to the Application Selection Processor Web Server and to the Selection Screen Web Server, using Hyper Text Transfer Protocols ("HTTP") through his preferred Web Browser. The end user has access to the Web Servers providing the on-demand services (each user of the service is provided with the URLs - Universal Resource Locators corresponding to the Web Servers) using his favorite Browser (The URL may be "book marked" within the Web Browser). The user is identified via :
- either his workstation's IP address, or
- a name/password mechanism that can be implemented.

If this is the first time the user has access to the Server or if the user has invalidated his locally saved copies of the Application Selection Processor and Selection Screen, his Application Selection Processor and Selection Screen versions indicate that nothing has yet been downloaded and therefore saved within the workstation.

### • Disconnected mode.

For some reasons, the user cannot or does not want to access the Web Servers, the saved versions of the Application Selection Processor and Selection Screen are started and the user gets access to his preferred application (assuming the information from the Selection Screen locally saved within the customer's workstation is still valid, which should be the case in a stable network for most of the time). This is especially valuable, when for example the user has a dialed up, low speed connection to the network.

### • Connected mode.

The user accesses the Web Servers which determine whether or not a download should take place. This download should take place when the version of the Application Selection Processor or the Selection Screen version (or both) within the Web Servers is more recent than the version saved within the user's workstation. The tests are performed independently for the Application Selection Processor and for the Selection Screen. At this point, if a download is advised, the user is prompted to access or reject the request:
- If the request is accepted, the download occurs and the new version of the downloaded information is saved within the customer's workstation,
- If the request is rejected, no downloading is performed (this is deferred at a latter time, for example when the workstation will be LAN connected to the network).

At this point, the locally cached version of the Application Selection Processor is started within the customer's workstation that is now able to make his final application selection, using the locally saved version of the Selection Screen.

### Customization Option

This customization is achieved by allowing each user to "prune" the Selection Screen definition to only keep locally the desired applications (the preferred applications for the user). This new (customized) Selection Screen may also contain pointers (Uniform Resource Locators - URL) to other Selection Screens (with more choices for the target applications). Selection Screens can be for example hierarchically organized according to geographical criteria. In another example, there will always be the URL of the original Selection Screen as provided by the Web Server, when the customization capabilities have been used, to always provide the end-users with the permanent capability to access all the possible applications. In these cases, the screen definition may be downloaded on the fly, using HTTP protocols and are made available to the local Application Selection Processor.

Such a customization is saved between downloads (for instance in separated external ASCII files), when a new version is obtained from the Selection Screen Web Server, only the references (names/IP addresses) of the application within the customized user Selection Screen are updated. This avoids the steps that would be required to customize again the user's Selection Screen, each time a new version is received.

While the invention has been particularly shown and described with reference to a preferred embodiment, it will be understood that various changes in form and detail may be made therein without departing from the spirit, and scope of the invention.

## Claims

1. A method for selecting an application in an Internet protocol (IP) network, said method comprising the steps of:
• locally selecting in a web client an application by means of:
• an application selection processor previously transferred from an application selection processor web server;
• a selection screen previously transferred from a selection screen web server;
• accessing the selected application from the web client.

2. The method according to the preceding claim comprising the steps of:
• transferring the application selection processor on the web client on request of said web client; and/or
• transferring the selection screen on the web client on request of said web client.

3. The method according to any one of the preceding claims comprising the further steps of:
• transferring the application selection processor on the web client automatically at each update of said application selection processor; and/or
• transferring the selection screen on the web client automatically at each update of said selection screen.

4. The method according to any one of the preceding claims wherein the application selection processor and the selection screen are located in single web server or in two web servers.

5. The method according to any one of the preceding claims the further steps of:
• defining classes of web clients;
• defining in the selection screen web server, a selection screen for each class of web clients.

6. The method according to any one of the preceding claims comprising the further step of:
• customizing in the web client the selection screen.

7. The method according to any one of the preceding claims wherein the selection screen comprises:
• one or a plurality of pointers to other selection screens, and/or
• pre selected applications.

8. The method according to any one of the preceding claims wherein the selected application is a systems network architecture (SNA) application.

9. A system, in particular a web client, comprising means adapted for carrying out the method according to any one of the preceding claims.

10. A computer readable medium comprising instructions for carrying out the method according to any one of claims 1 to 8.

11. A method for selecting an application in an Internet protocol (IP) network, said method comprising the steps of:
• transferring from an application selection processor web server, an application selection processor on a web client;
• transferring from a selection screen web server, a selection screen on the web client;
for in a web client locally:
• selecting an application by means of:
• said application selection processor;
• a selection screen.
• accessing the selected application..

12. The method according to the preceding claim wherein
• the application selection processor is transferred on the web client on request of said web client; and/or
• the selection screen is transferred on the web client on request of said web client.

13. The method according to any one of claims 11 to 12 wherein:
• the application selection processor is transferred on the web client automatically at each update; and/or
• the selection screen is transferred on the web client on request of said web client.

14. The method according to any one of claims 11 to 13 wherein the application selection processor and the selection screen are located in single web server or in two web servers.

15. The method according to any one of claims 11 to 14 comprising the further steps of:
• defining classes of web clients;
• defining in the selection screen web server, a selection screen for each class of web clients.

16. The method according to any one of claims 11 to 15 wherein the selected application is a systems network architecture (SNA) application.

17. A system, in particular a web server, comprising means adapted for carrying out the method according to any one of claims 11 to 16.

18. A computer readable medium comprising instructions for carrying out the method according to any one of claims 11 to 16.
